# EUROPÄISCHE PATENTANMELDUNG

(11) **EP 4 751 972 A2**
(43) Veröffentlichungstag der Anmeldung: **03.06.2026**
(21) Anmeldenummer: 26173108.7
(22) Anmeldetag: 20.01.2021
(51) Int. Cl.: B60K 37/20

(54) **ANORDNUNG EINER HANDBALLENAUFLAGE UND EINES BEDIENELEMENTS FÜR EIN FAHRZEUG**

(30) Priorität: 04.02.2020 DE 102020000729
(62) Teilanmeldung aus: 21701290.5
(71) Anmelder: MAN Truck & Bus SE, 80995 München (DE)
(72) Erfinder: Ochs, Thomas, 80995 München (DE)
(74) Vertreter: v. Bezold & Partner Patentanwälte - PartG mbB

(57) **Zusammenfassung**

Die Erfindung betrifft eine Anordnung (1) einer Handballenauflage (10) und eines handbetätigbaren Bedienelements (20) für ein Fahrzeug. Die Handballenauflage (10) ist dazu ausgebildet, eine erste und eine zweite Position relativ zum Bedienelement (20) einzunehmen, wobei die Handballenauflage (10) in der ersten Position derart positioniert ist, dass sie ein Abstützen einer Hand (2) bei der Bedienung des Bedienelements (20) ermöglicht. Zum Schutz vor Beschädigung und zur besseren Nutzung des Fahrzeuginnenraums ist die Handballenauflage (10) in der zweiten Position erfindungsgemäß derart positioniert, dass die Handballenauflage (10) das Bedienelement (20) zumindest teilweise überragt und/oder verdeckt.

## Beschreibung

Die Erfindung betrifft eine Anordnung einer Handballenauflage und eines Bedienelements für ein Fahrzeug, wobei die Handballenauflage ein Abstützen einer Hand bei der Bedienung des Bedienelements ermöglicht.

Aus der Praxis ist bekannt, dass die Bedienung eines Bedienelementes in einem Fahrzeug oftmals erschwert wird, weil die Bewegungen des Fahrzeugs während der Fahrt, insbesondere kurzfristige Bewegungen, eine präzise Eingabe erschweren.

Aus der Praxis ist ferner bekannt, dass im Nutzfahrzeugbereich durch die beim Fahren ständig vorhandene Relativbewegung zwischen Nutzer, z. B. dem Fahrer auf einem luftgefedertem Schwingsitz, und Bedienelementen ein besonders hoher Bedarf besteht, eine zielgerichtete, präzise Bedienung von Bedienelementen während der Fahrt zu ermöglichen.

Aus der Praxis ist daher bekannt, eine Handballenauflage an dem Bedienelement anzuordnen, die in unmittelbarer Nähe des Bedienelementes die Hand fixiert und eine feinfühlige und exakte Bedienung z. B. eines Dreh-Drückstellers ermöglicht. Das Bedienelement mitsamt der Handballenauflage sollte daher, um während der Fahrt dauerhaft eine bequeme und beschwerdefreie Bedienung ermöglichen zu können, in ergonomisch richtiger Position zum Bediener angebracht sein; in diesem Fall in einem Abstand zum Fahrer, der die Bedienung ohne Vorbeugen des Oberkörpers und ohne Abheben der Schulter von der Sitzrückenfläche ermöglicht.

Die Offenlegungsschrift DE 10 2013 222 696 A1 schlägt das Vorsehen einer Handballenauflage vor, die in zwei unterschiedlichen Positionen zu einem Lenkradkranz angeordnet werden kann, um die Bedienung einer berührungsempfindlichen Fläche (Touchpad) trotz Fahrzeugbewegungen während der Fahrt zu erleichtern. Die Handballenauflage kann bei Nichtgebrauch in eine nicht-störende, platzsparende Lage positioniert werden. Nachteilig hieran ist jedoch, dass die vorgeschlagene Lösung in erster Linie für Bedienelemente im Innern eines Lenkradkranzes und insbesondere für den autonomen Fahrbetrieb geeignet ist und sich nicht auf die verbesserte Bedienung anderer Bedienelemente im Fahrzeug übertragen lässt.

Es ist daher eine Aufgabe der Erfindung, einen Ansatz bereitzustellen, mit dem Nachteile herkömmlicher Techniken vermieden werden können und der eine präzise Bedienung eines handbetätigten Bedienelements ermöglicht.

Diese Aufgaben werden durch eine Anordnung einer Handballenauflage und eines handbetätigbaren Bedienelements mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt der Erfindung wird eine Anordnung einer Handballenauflage und eines handbetätigbaren Bedienelements für ein Fahrzeug bereitgestellt. Hierbei ist die Handballenauflage dazu ausgebildet, zumindest eine erste Position und eine zweite Position relativ zum Bedienelement einzunehmen. In der ersten Position ist die Handballenauflage in an sich bekannter Weise derart positioniert, dass sie ein Abstützen einer Hand bei der Bedienung des Bedienelements ermöglicht. Die erste Position stellt somit eine Gebrauchsposition der Handballenauflage dar.

Erfindungsgemäß ist die Handballenauflage in der zweiten Position derart positioniert, dass die Handballenauflage das Bedienelement zumindest teilweise überragt und/oder verdeckt. Darunter wird verstanden, dass zumindest ein Teilabschnitt der Handballenauflage das Bedienelement zumindest teilweise überragt und/oder verdeckt.

Dies bietet den besonderen Vorzug, dass die Handballenauflage in einer vorteilhaften Doppelfunktion verwendet werden kann: Einerseits ermöglicht die Handballenauflage, wenn diese in der ersten Position positioniert ist, eine verbesserte Bedienung eines Bedienelementes durch ein Abstützen einer Hand, mit welcher das Bedienelement bedient wird. Andererseits kann die Handballenauflage, wenn sie nicht gebraucht wird, z. B. bei abgestelltem Fahrzeug, in eine Position (hier als zweite Position bezeichnet) gebracht werden, in der die Handballenauflage einen mechanischen Schutz des Bedienelements bietet, indem sie das Bedienelement zumindest teilweise überragt und/oder verdeckt. Die zweite Position stellt somit eine Nicht-Gebrauchsposition der Handballenauflage dar, da die Handballenauflage in dieser Position nicht als Handballenauflage zur Bedienung des Bedienelementes gebraucht wird.

Dies ist insbesondere im Nutzfahrzeugbereich bei Nutzfahrzeugen mit Fahrerkabine vorteilhaft. Bei Stillstand des Fahrzeugs entsteht meistens eine neue Nutzungssituation. Der Fahrer wird aus seinem Sitz aufstehen, um sich z. B. in dem Bereich des Kabineninnenraumes aufzuhalten, der dies am bequemsten ermöglicht: Der Platz zwischen den Sitzen ermöglicht evtl. Stehhöhe, die Liege wird benutzt etc. Beim Übergang in diesen Bereich ist je nach Statur des Nutzers ein gewisses Durchstiegsmaß zwischen Fahrersitz und Instrumententafel erforderlich, um nicht mit den Beinen hängen zu bleiben oder Beschädigungen an Bedienteilen zu verursachen. Ist nun ein Bedienelement z. B. in diesem Durchstiegsbereich angeordnet, wird dieser Durchstieg durch das in ergonomisch richtiger Position angebrachte Bedienelement zwangsläufig in seiner lichten Weite reduziert. Es entsteht Verletzungs- und Beschädigungsgefahr. Die erfindungsgemäße Anordnung aus Bedienelement und Handballenauflage ist somit besonders vorteilhaft für Bedienelemente, die in einem derartigen Durchstiegsbereich angeordnet sind.

Eine Handballenauflage kann einen Auflagebereich aufweisen, der geeignet ist, um als Abstütz- bzw. Auflagefläche für einen Handballen einer Person, die das Bedienelement bedienen soll, dienen zu können. Hierzu kann die Handballenauflage zur Ausbildung des Auflagebereichs eine verwindungssteife Ablage aufweisen, die derart proportioniert ist, dass sie mindestens die Größe und Form hat, dass ein typischer Handballen hierauf abgestützt werden kann.

In einer bevorzugten Ausführungsform der Anordnung weist die Handballenauflage einen länglichen und/oder armförmigen Haltebereich auf, der zum beweglichen Anordnen der Handballenauflage relativ zum Bedienelement ausgebildet ist. Gemäß dieser Ausführungsform weist die Handballenauflage ferner einen Kopfbereich auf, der an einem Endbereich des Haltebereichs angeformt ist, von diesem absteht, vorzugsweise in Richtung des Bedienelements absteht, und an seiner Oberseite eine Handballenauflagefläche ausbildet. Die Ausführungsform ermöglicht eine kompakte, platzsparende Realisierung der Handballenauflage. Ein besonderer Vorzug ist ferner, dass die Handballenauflage in der zweiten Position einen vorher benötigten Raum in Richtung zu einer Bedienperson freigibt, so dass dieser Raum bei Nichtbenutzung des Bedienelements anderweitig genutzt werden kann, z. B. zur Vergrößerung eines Durchstiegsbereichs. Ferner wird die Gefahr einer Beschädigung sowohl der Handballenauflage als auch des Bedienelements reduziert. Der Haltebereich und der Kopfbereich können ein einstückiges Bauteil ausbilden.

Hierbei kann der Kopfbereich in der zweiten Position eine Abdeckung oder eine Teilabdeckung für eine Oberseite des Bedienelements ausbilden.

Der Kopfbereich kann beispielsweise griffförmig, knaufförmig, pilzförmig und/oder als Verdickung an einen Endbereich des Haltebereichs ausgeführt sein. Ferner kann der Kopfbereich im Wesentlichen senkrecht von dem Haltebereich abstehen, vorzugsweise nur in einer Richtung senkrecht von dem Haltebereich abstehen. Diese Varianten sind vorteilhaft, da diese Formen sowohl vorteilhaft für die Realisierung einer Handballenauflagefläche am Kopfbereich sind als auch zur Realisierung einer zumindest teilweisen Überragung und/oder Verdeckung des Bedienelements durch den Kopfbereich in der zweiten Position der Handballenauflage.

Gemäß einer weiteren Ausführungsform ist vorgesehen, dass der Kopfbereich in der zweiten Position das Bedienelement derart überragt, dass bei auf der Handballenauflage abgestützter Hand eine handbetätigte Bedienung des Bedienelements nicht möglich ist oder zumindest behindert wird oder nur unter erheblichen Komforteinbußen möglich ist. Mit anderen Worten wird eine Bedienung des Bedienelements verhindert oder zumindest erschwert, wenn die Handballenauflage in die zweite Position gebracht wird, jedoch kann stattdessen die Handballenauflage in dieser Position einen mechanischen Schutz des Bedienelements ausbilden.

In einer weiteren Ausführungsform weist die Handballenauflage eine Schwenkverbindung auf, um die Handballenauflage relativ beweglich zum Bedienelement anzuordnen und zum Bedienelement verschwenkbar und/oder klappbar auszuführen. Die Schwenkverbindung ermöglicht somit das Einnehmen der zweiten Position ausgehend von der ersten Position hin zum Bedienelement und umgekehrt. Die Ausführungsform ermöglicht eine besonders kompakte, platzsparende Realisierung der Handballenauflage. Ein besonderer Vorzug ist ferner, dass die Handballenauflage in der zweiten Position einen vorher durch die Positionierung in der ersten Position (Gebrauchsposition) benötigten Raum in Richtung zu einer Bedienperson durch das Verschwenken in die zweite Position wieder freigibt, so dass dieser Raum bei Nichtbenutzung des Bedienelements anderweitig genutzt werden kann, z. B. zur Vergrößerung eines Durchstiegsbereichs, wie vorstehend beschrieben wurde.

Beispielsweise kann zur Ausbildung der Schwenkverbindung die Handballenauflage um eine quer zur Längsrichtung des Haltebereichs verlaufende Schwenkachse, die an einem dem Kopfbereich abgewandten Endbereich des Haltebereichs angeordnet ist, verschwenkbar zum und/oder am Bedienelement angeordnet sein. Die Handballenauflage kann hierzu an einem Gehäuse oder einer Halterung des Bedienelements verschwenkbar gehaltert sein. In einem im Fahrzeug verbauten Zustand kann die Anordnung so montiert sein, dass die Schwenkachse eine Horizontalachse ist, die ein "Hochklappen" oder Hochverschwenken der Handballenauflage ermöglicht, um die Handballenauflage ausgehend von der ersten Position in die zweite Position zu bringen. Die Schwenkverbindung kann direkt die Handballenauflage mit dem Bedienelement oder einem Gehäuse oder einer Halterung des Bedienelements verschwenkbar verbinden. Alternativ kann die Schwenkverbindung zwischen Handballenauflage und einem anderen Fahrzeugbauteil, an dem das Bedienteil gehaltert ist oder das benachbart zum Bedienteil angeordnet ist, ausgebildet sein.

Es wird jedoch betont, dass auch andere Ausführungsformen möglich sind, um die Handballenauflage relativ beweglich zum Bedienelement anzuordnen, beispielsweise eine Führungsmechanik, mittels derer die Handballenauflage von der ersten in die zweite Position verfahrbar ist, vorzugsweise linear verfahrbar ist.

Das Bedienelement ist nicht auf eine bestimmte Ausführungsform eingeschränkt. Nachfolgend werden lediglich mögliche und besonders vorteilhafte Ausführungsformen des Bedienelements beschrieben.

**In** einer weiteren Ausführungsform kann das Bedienelement einen mechanischen Drehsteller umfassen. Alternativ oder zusätzlich kann das Bedienelement eine berührungsempfindliche Eingabe-Oberfläche (sog. Touchpad) umfassen. Alternativ oder zusätzlich kann der Drehsteller als Dreh-Drücksteller ausgebildet sein, d. h., der Drehsteller kann mittels einer Drehbedienung und einer Drückbetätigung bedient werden.

Gemäß einer weiteren bevorzugten Variante kann der mechanische Drehsteller einen drehbaren Außenring aufweisen, der die berührungsempfindliche Eingabe-Oberfläche (sog. Touchpad) umschließt. Gemäß einer weiteren bevorzugten Variante kann der Außenring alternativ oder zusätzlich einen mechanischen Druck- oder Kippschalter ausbilden, der vorzugsweise als monostabiler Tast-, Drück- oder Kippschalter, der nach dem manuellen Auslenken in zumindest eine Richtung wieder in seine Ausgangslage zurückkehrt, ausgeführt ist. Dies bedeutet, dass der monostabile Tast-, Drück- oder Kippschalter somit nach Wegfall der äußeren Betätigungskraft immer selbsttätig in seine Ausgangslage zurückgeht. Anders ausgedrückt weist der monostabile Tast-, Drück- oder Kippschalter im Wesentlichen nur eine stabile Tast-, Drück- oder Kippstellung auf und kehrt nach einem Schalten in eine vorwärts oder rückwärts oder seitlich gerichtete Richtung immer wieder in diese monostabile Stellung zurück.

Vorzugsweise vereint das Bedienelement sowohl den Drehsteller, die berührungsempfindliche Eingabe-Oberfläche und den mechanischen Druck- oder Kippschalter in einem multifunktionalem Bedienelement. Derartige Bedienelemente sind im Fahrzeug besonders vorteilhaft zur Bedienung eines Infotainment-Systems des Fahrzeugs. Entsprechend kann es sich bei dem Bedienelement um ein Bedienelement für ein Infotainment-System des Fahrzeugs handeln.

**In** einer weiteren Ausführungsform kann die Anordnung einen Überlastschutz zum Schutz der Handballenauflage und/oder des Bedienelements vor zu starker mechanischer Belastung aufweisen. Beispielsweise kann der Überlastschutz optional als Scharnier (Schutzscharnier) oder Gelenk (Schutzgelenk) ausgeführt sein, das bei einer vorbestimmten mechanischen Überlastung, die eine Bedienperson auf die Anordnung ausübt, ausrastet oder überschnappt. Beispielsweise kann die Schwenkverbindung der Handballenauflage als das Schutzscharnier oder Schutzgelenk ausgeführt sein, das eine Federeinrichtung bzw. Federmechanismus zum Schutz vor mechanischer Überlastung aufweist, wobei die Federeinrichtung bzw. der Federmechanismus, die Handballenauflage gegen eine Anschlagkante drückt, wenn sich die Handballenauflage in der ersten und/oder zweiten Position befindet. Die Federeinrichtung kann dabei so ausgelegt sein, dass wenn die Last auf die Handballenauflage einen üblichen Bereich übersteigt, z. B. einen vorbestimmten Schwellenwert übersteigt, die Anschlagkante ausweichen kann, beispielweise in dem die Handballenauflage eine dritte Position einnimmt, um Überlastkräfte abzuleiten.

Gemäß einem weiteren Gesichtspunkt betrifft die Erfindung ferner ein Fahrzeug mit einer Anordnung umfassend die Handballenauflage und das Bedienelement, wie in diesem Dokument beschrieben. Das Fahrzeug kann ein Kraftfahrzeug sein, vorzugsweise ein Nutzfahrzeug, wie beispielsweise ein Lastkraftwagen oder ein Omnibus.

**In** einer Ausführungsform ist das Bedienelement ein Bedienelement zur Ansteuerung eines Fahrzeug-Infotainment-Systems. Hierbei kann das Bedienelement ein Bedienelement sein, mittels dessen lediglich ein Infotainment-System des Fahrzeugs ansteuerbar ist.

**In** einer weiteren Ausführungsform können das Bedienelement und die Handballenauflage im Bereich oder angrenzend zu einer Innerraumkomponente des Fahrzeugs derart angeordnet sein, dass die Handballenauflage sich in der zweiten Position näher an der Innenraumkomponente befindet als in der ersten Position. Die Innenraumkomponente kann eine Instrumententafel sein. Bei dieser Variante befindet sich die Handballenauflage in der zweiten Position somit näher an der Instrumententafel und gibt in dieser Stellung zuvor benötigten Raum zur anderweitigen Nutzung frei.

Gemäß einer besonders bevorzugten Ausführungsform ist die Anordnung, umfassend das Bedienelement und die Handballenauflage, zwischen einer Instrumententafel und einem Fahrersitz des Fahrzeugs angeordnet, wobei ein Freiraum zwischen der Anordnung und dem Fahrersitz größer ist, wenn sich die Handballenauflage in der zweiten Position befindet, als wenn sich die Handballenauflage in der ersten Position befindet.

Gemäß einer vorteilhaften Weiterbildung dieser Ausführungsform ist das Fahrzeug ein Kraftfahrzeug, vorzugsweise ein Nutzfahrzeug, z. B. ein Lastkraftwagen, umfassend ein Fahrerhaus, in dem hinter einem Fahrersitz ein Aufenthaltsbereich für den Fahrer angeordnet ist, der über einen Durchstieg zum Aufenthaltsbereich, der sich an den Fahrersitz anschließt, erreichbar ist. Derartige Aufenthaltsbereiche von Fahrerhäusern sind an sich aus dem Stand der Technik bekannt. Gemäß der vorteilhaften Weiterbildung ist die Anordnung, umfassend das Bedienelement und die Handballenauflage, zwischen einer Instrumententafel und einem Fahrersitz des Fahrzeugs in dem Durchstiegsbereich derart angeordnet, dass die Handballenauflage sich in der zweiten Position näher an der Instrumententafel befindet als in der ersten Position. Ferner ist eine Breite des Durchstiegsbereichs größer, wenn sich die Handballenauflage in der zweiten Position befindet.

Wie vorstehend bereits ausgeführt, ist diese Ausführungsvariante besonders vorteilhaft, um bei Stillstand des Fahrzeugs eine unbeabsichtigte Beschädigung des Bedienelements und/oder der Handballenauflage zu vermeiden, wenn z. B. bei Stillstand des Fahrzeugs der Fahrer aus seinem Sitz aufsteht, um sich in dem Bereich des Kabineninnenraumes durch den Durchstiegsbereich zu bewegen. Hierzu ist im Stillstand die Handballenauflage in die zweite Position zu bringen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine Seitenansicht einer Anordnung aus Handballenauflage und Bedienelement in der ersten Position gemäß einer Ausführungsform der Erfindung;
- Figur 1B: eine Seitenansicht einer Anordnung aus Handballenauflage und Bedienelement in der zweiten Position gemäß einer Ausführungsform der Erfindung;
- Figur 2A: eine perspektivische Ansicht einer Anordnung aus Handballenauflage und Bedienelement in der ersten Position gemäß einer Ausführungsform der Erfindung;
- Figur 2B: eine perspektivische Ansicht einer Anordnung aus Handballenauflage und Bedienelement in der zweiten Position gemäß einer Ausführungsform der Erfindung;
- Figur 3A: eine Seitenansicht einer Anordnung aus Handballenauflage und Bedienelement in der ersten Position mit einer aufgelegten Hand gemäß einer Ausführungsform der Erfindung;
- Figur 3B: eine Seitenansicht einer Anordnung aus Handballenauflage und Bedienelement in der zweiten Position mit einer aufgelegten Hand gemäß einer Ausführungsform der Erfindung;
- Figur 4A: eine Draufsicht eines Innenraums eines Fahrzeugs mit einer Anordnung aus Handballenauflage und Bedienelement in der ersten Position gemäß einer Ausführungsform der Erfindung;
- Figur 4B: eine Draufsicht eines Innenraums eines Fahrzeugs mit einer Anordnung aus Handballenauflage und Bedienelement in der zweiten Position gemäß einer Ausführungsform der Erfindung; und
- Figur 5: eine Seitenansicht einer Anordnung aus Handballenauflage und Bedienelement in einer dritten Position zur Illustration der Funktion eines Überlastschutzes gemäß einer weiteren Ausführungsform der Erfindung.

Gleiche oder äquivalente Elemente sind in allen Figuren mit denselben Bezugszeichen bezeichnet und zum Teil nicht gesondert beschrieben.

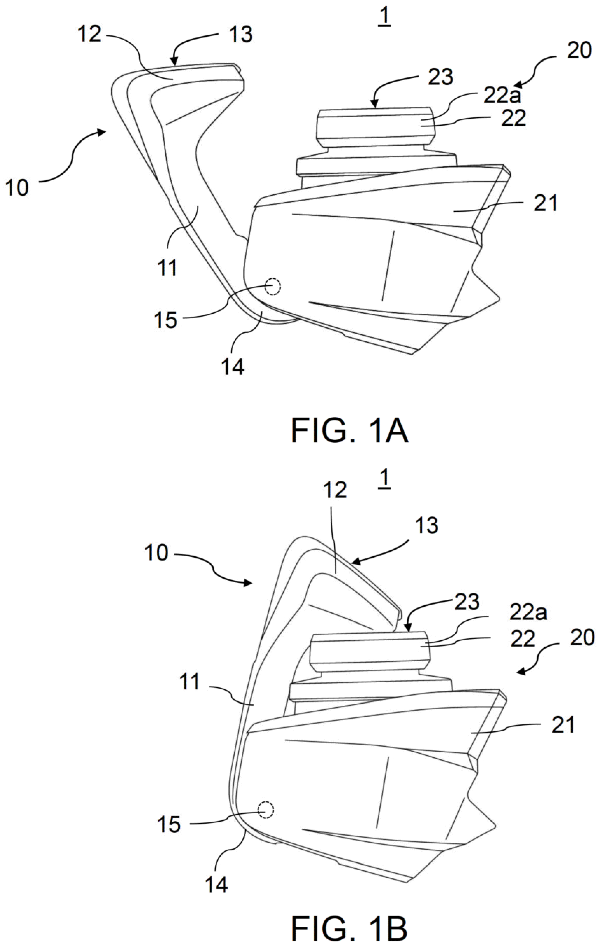

Figur 1A zeigt eine schematische Seitenansicht einer Anordnung 1 aus einer Handballenauflage 10 und einem Bedienelement 20 gemäß einer Ausführungsform der Erfindung. Bei dem Bedienelement 20 handelt es sich um ein handbetätigbares Bedienelement 20 für ein Infotainment-System eines Kraftfahrzeugs. Ein Infotainment-System im Sinne der Erfindung ist insbesondere ein Informations-, Entertainment- und Kommunikationssystem oder ein Informations- und Entertainmentsystem des Kraftfahrzeugs. Über das Bedienelement 10 kann das Infotainment-System bedient werden, z. B. zur Bedienung des Navigationssystems, des Entertainmentsystems und/oder zur Auswahl und zum Informationsabruf von Fahrzeuginformationen.

Das Bedienelement 20 umfasst dabei gemäß der beispielhaft gezeigten Ausführungsform einen mechanischen Drehsteller 22, der für Bedieneingaben einen drehbaren Außenring 22a aufweist, und eine berührungsempfindliche Eingabe-Oberfläche 23, die sich auf der Oberseite des Bedienelements 20 befindet und vom drehbaren Außenring 22a umschlossen wird. Die berührungsempfindliche Eingabe-Oberfläche 23 bildet ein sog. Touchpad aus, so dass eine Bedienperson mit ihren Fingern Eingabebefehle über die Eingabe-Oberfläche 23 eingeben kann. Der Außenring 22a bildet ferner einen mechanischen Druckschalter aus, der als monostabiler Kippschalter ausgeführt ist, der in vier horizontale Richtungen auslenkbar ist und der nach dem manuellen Auslenken wieder in seine Ausgangslage zurückkehrt. Das Bedienelement kann somit nicht nur durch Drehen des Außenrings 22a und über die berührungsempfindliche Eingabe-Oberfläche 23 bedient werden, sondern zusätzlich auch durch eine horizontale Auslenkung des Außenrings 22a.

Das Bedienelement 20 ist in einer Halterung 21 gehaltert, die z. B. an einer Instrumententafel oder an einem Bereich einer Mittelkonsole angeordnet sein kann.

Die Anordnung umfasst ferner eine Handballenauflage 10. Die Handballenauflage 10 dient dazu, um die Bedienung des Bedienelementes 10 zu erleichtern, die ohne Handballenauflage 10 dadurch erschwert würde, dass die Bewegungen des Fahrzeugs während der Fahrt, insbesondere kurzfristige Bewegungen, eine präzise Eingabe erschweren. Im Nutzfahrzeugbereich ist dies von noch größerer Bedeutung, da der Fahrer in der Regel auf einem luftgefederten Schwingsitz sitzt und dadurch beim Fahren ständig leicht federnde Bewegungen ausführt, die zu ständigen Relativbewegungen zwischen Fahrer und einem im Fahrzeug fest angeordneten Bedienelement führt.

Durch Auflegen eines Handballens 3 auf der Handballenauflage wird eine zielgerichtete, präzise Bedienung des Bedienelementes 20 erleichtert, denn die Hand 2 wird auf der Handballenauflage 10 fixiert, so dass eine feinfühlige und exakte Bedienung z. B. des Dreh-Drückstellers 21 oder des Touchpads 23 ermöglicht wird.

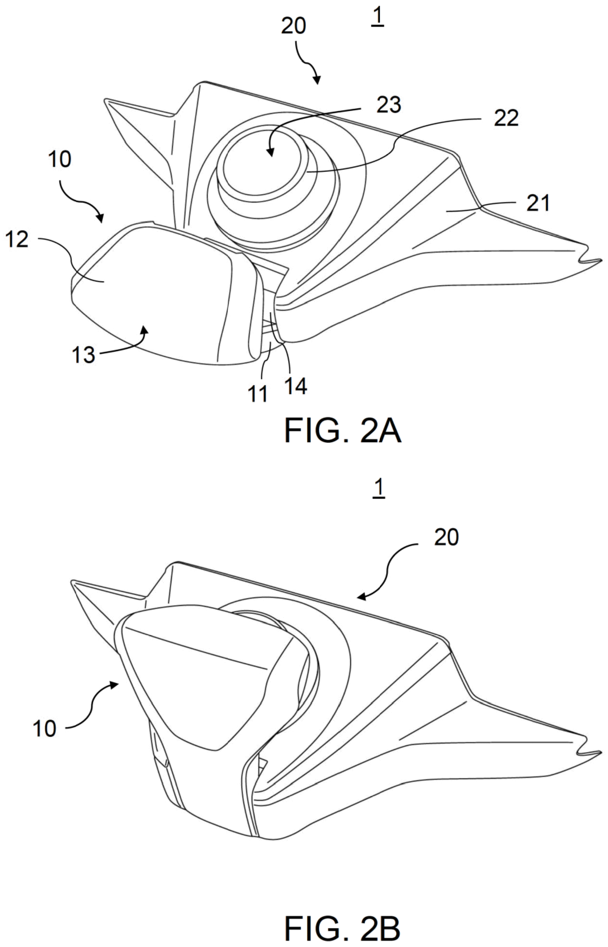

Die Handballenauflage 10 ist über eine Schwenkverbindung 15 verschwenkbar zum Bedienelement 20 angeordnet und kann durch Verschwenken in eine erste und eine zweite Position relativ zum Bedienelement 20 gebracht werden. In der ersten Position ist die Handballenauflage 10 derart positioniert, dass sie ein Abstützen einer Hand 2 bei der Bedienung des Bedienelements 20 ermöglicht. Diese erste Position ist in den Figuren 1A, 2A und 3A dargestellt.

In der zweiten Position ist die Handballenauflage 10 derart positioniert, dass die Handballenauflage 10 das Bedienelement 20 zumindest teilweise überragt und/oder verdeckt. Diese erste Position ist in den Figuren 1B, 2B und 3B dargestellt.

Die Handballenauflage 10 weist hierzu einen länglichen und armförmigen Haltebereich 11 auf, der zum beweglichen Anordnen der Handballenauflage 10 relativ zum Bedienelement 20 ausgebildet ist.

Die Schwenkverbindung 15 ist durch eine quer zur Längsrichtung des Haltebereichs verlaufende Schwenkachse 15 gebildet, die an einem unteren Endbereich 14 des Haltebereichs 11 bzw. des Schwenkarms 11 angeordnet ist, um die Handballenauflage verschwenkbar am Bedienelement 20, hier der Halterung 21 des Bedienelements 20, anzuordnen.

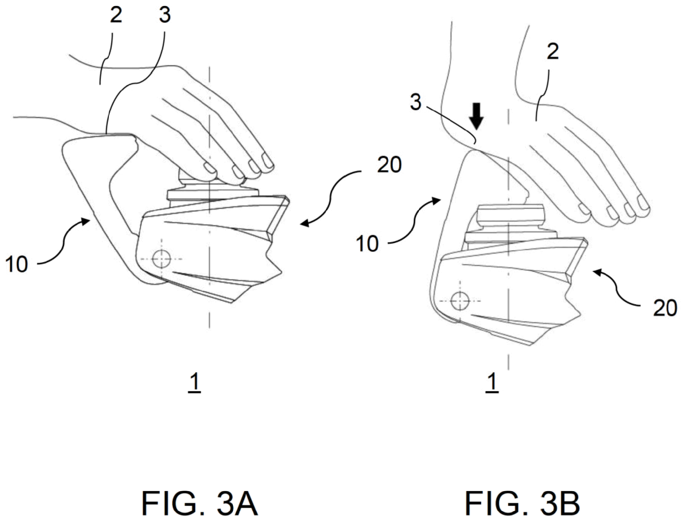

Die Handballenauflage 10 umfasst ferner einen Kopfbereich 12, der an einem Endbereich des Haltebereichs 11 angeformt ist und von diesem in Richtung des Bedienelements 20 absteht. Der Kopfbereich 12 bildet an seiner Oberseite eine Handballenauflagefläche 13 zur Aufnahme des Handballens 3 aus. Die Handballenauflagefläche 13 muss groß genug sein, um als Abstütz- bzw. Auflagefläche für einen Handballen 3 einer erwachsenen Person dienen zu können (vgl. Fig. 3A).

Die Auflagefläche 13 ist ferner plan oder leicht gekrümmt ausgeführt. Wie in Fig. 1A erkennbar ist, ist der Kopfbereich 12 als Verdickung an einen Endbereich des Haltebereichs 11 an diesen angeformt. Der Kopfbereich kann griffförmig, knaufförmig oder pilzförmig ausgeführt sein.

Im Fahrzeugstillstand kann durch manuelles Verschwenken der Handballenauflage 10 diese in die zweite Position gebracht werden, wie z. B. in Fig. 1B dargestellt. Wie bereits erwähnt, ist die Handballenauflage 10 in der zweiten Position derart positioniert, dass die Handballenauflage das Bedienelement 20 zumindest teilweise überragt und/oder verdeckt. Hier überragt der Kopfbereich 12 der Handballenauflage das Bedienelement 20 zumindest teilweise derart, dass bei auf der Handballenauflage 10 abgestützter Hand 2 eine handbetätigte Bedienung des Bedienelements 20 nicht möglich ist oder zumindest behindert wird oder nur unter erheblichen Komforteinbußen möglich ist. Dies ist in Fig. 3B illustriert.

Die zweite Position bietet jedoch den Vorteil, dass durch die Handballenauflage 10 einerseits bisher benötigter Raum im Fahrzeug freigegeben wird und gleichzeitig ein mechanischer Schutz für das Bedienelement 20 durch die Handballenauflage ermöglicht wird, insbesondere für die empfindliche Oberseite (Touchpad, Drehsteller etc.) des Bedienelements, um dieses vor unbeabsichtigter Beschädigung besser zu schützen.

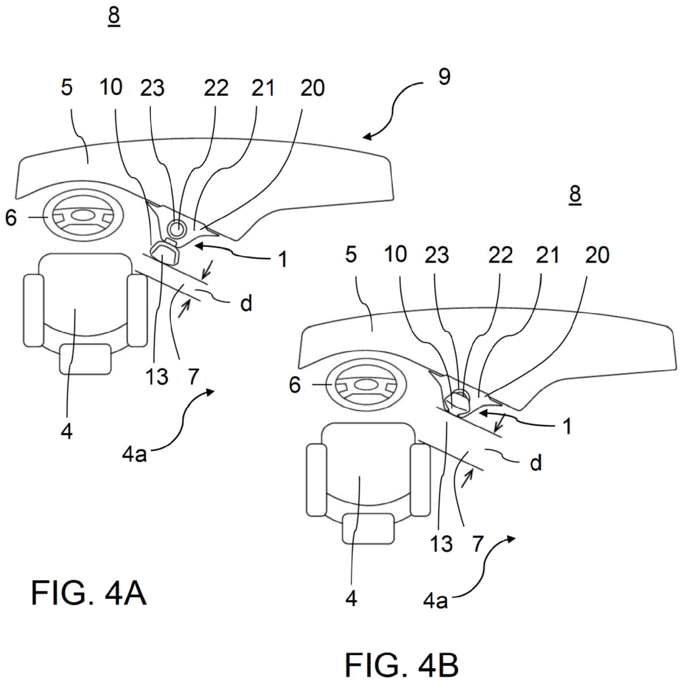

Dies ist in den Figuren 4A und 4B nochmals anhand eines weiteren Ausführungsbeispiels illustriert. Die Figuren 4A und 4B zeigen als Beispiel für ein Fahrzeug 8 ein Nutzfahrzeug, insbesondere einen Lastkraftwagen, wobei hiervon lediglich eine schematische Draufsicht eines Innenraums eines Fahrerhauses bzw. einer Fahrerkabine 9 gezeigt ist. Die anderen Teile des Fahrzeugs können in an sich bekannter Weise ausgeführt sein und sind nicht dargestellt.

Wiederum erkennbar ist die Anordnung 1 der Handballenauflage 10 und des handbetätigbaren Bedienelements 20 zur Bedienung eines Infotainment-Systems des Fahrzeugs, wobei die Handballenauflage 10 wiederum dazu ausgebildet ist, eine erste und eine zweite Position relativ zum Bedienelement 20, wie vorstehend beschrieben, einnehmen zu können.

Die Anordnung 1 aus Bedienelement 20 und Handballenauflage 10 ist, um während der Fahrt dauerhaft bequeme und beschwerdefreie Bedienung ermöglichen zu können, in ergonomisch geeigneter Position zum Bediener angebracht; in diesem Fall in einem Abstand zum Fahrer, der die Bedienung ohne Vorbeugen des Oberkörpers und ohne Abheben der Schulter von der Sitzrückenfläche ermöglicht. Hierzu ist die Anordnung 1 in Armreichweite vom Fahrersitz 4 in einem Mittelbereich der Instrumententafel 5 angeordnet. Unter der Instrumententafel 5 wird der gesamte sich entlang der Frontwindschutzscheibe erstreckende Bereich verstanden, der das Kombi-Instrument des Fahrzeugs, den/die Bildschirm/e des Infotainment-Systems und den an die Windschutzscheibe angrenzenden Bereich auf der Beifahrerseite umfasst.

Hinter dem Fahrersitz 4 befindet sich in der Fahrerkabine 9 ein Aufenthaltsbereich 4a für den Fahrer, z. B. mit einer Schlafgelegenheit. Der Aufenthaltsbereich 4a ist über einen Durchstieg 7 ausgehend vom Fahrersitz 4 erreichbar. Wie in Fig. 4A erkennbar ist, ist die Anordnung 1 angrenzend oder in einem Randbereich dieses Durchstiegs 7 im Bereich der Instrumententafel 5 angeordnet.

Hierbei ist die Anordnung 1, umfassend das Bedienelement 20 und die Handballenauflage 10, derart zwischen der Instrumententafel 5 und dem Fahrersitz 4 in dem Durchstiegsbereich 7 angeordnet, dass die Handballenauflage 10 sich in der zweiten Position näher an der Instrumententafel 5 befindet als in der ersten Position. Zum Einnehmen der zweiten Position wird die Handballenauflage hin zum Bedienelement 20 in Richtung Instrumententafel 5 hochgeklappt. Dadurch vergrößert sich in der zweiten Position eine Breite d des Durchstiegsbereichs 7, wenn sich die Handballenauflage 10 in der zweiten Position befindet im Vergleich zu einer Situation, wenn sich die Handballenauflage 10 in der ersten Position befindet.

Zusammenfassend wird somit die Durchstiegs-Breite d zwischen Fahrersitz 4 und Instrumententafel 5 vergrößert, um dem Fahrer den Durchstieg in den Aufenthaltsbereich 4a der Kabine zu erleichtern und die Gefahr des Hängenbleibens zu reduzieren. Das empfindliche, mit Sensorik und beweglichen Teilen ausgestattete Bedienelement 20 wird gleichzeitig von der Handballenauflage 10 umhüllt oder zumindest zum Teil abgedeckt und so vor mechanischer Beschädigung geschützt. Hierbei spielt nicht nur der Schutz beim Vorbeistreifen eine Rolle, sondern insbesondere die stabile Abdeckung von oben, für den nicht unwahrscheinlichen Fall, dass der Fahrer sich beim Aufrichten aus dem Sitz an der Konsole des Bedienelements abstützt.

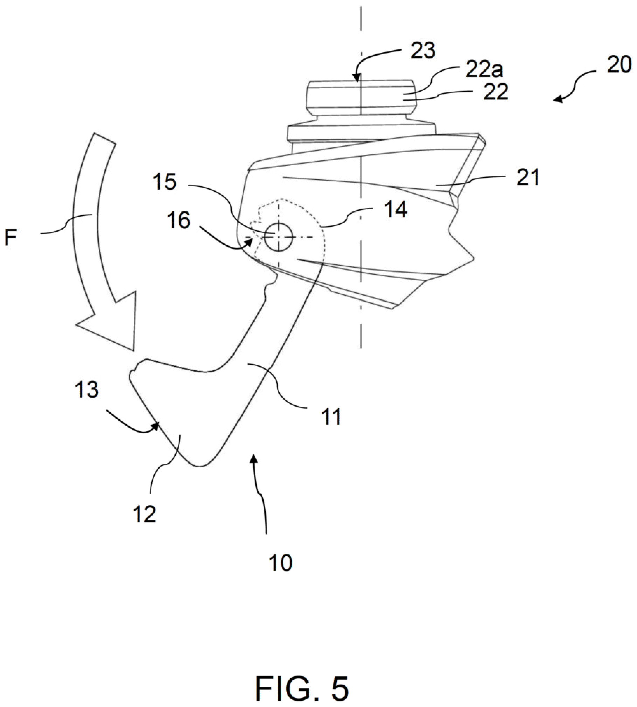

Figur 5 zeigt eine Seitenansicht einer Anordnung aus Handballenauflage und Bedienelement in einer dritten Position zur Illustration der Funktion eines Überlastschutzes gemäß einer weiteren Ausführungsform der Erfindung. Gemäß dieser weiteren Ausführungsform weist die Anordnung aus Handballenauflage 10 und Bedienelement 20 einen Überlastschutz 16 zum Schutz der Handballenauflage und/oder des Bedienelements vor zu starker mechanischer Belastung auf.

Wenn die Handballenauflage 10 in ihre Einsatzposition verschwenkt ist, d. h. die Handballenauflage befindet sich in der ersten Position gemäß Figur 1A, wird die Endstellung der Drehbewegung dabei durch eine Anschlagkante (nicht dargestellt) unterhalb der Drehachse 15 definiert, an die sich das Bauteil 11, insbesondere der Endbereich 14 des Schwenkarms 11, anlegt und sich daran abstützt. Mittels eines starken Federmechanismus (nicht gezeigt) kann diese Anschlagkante ausweichen, wenn die Last den in der Benutzung üblichen Bereich verlässt und so hoch wird, dass Teile der Baugruppe sonst brechen würden. Mit anderen Worten ist der Federmechanismus so ausgelegt, dass sich das Bauteil von der Anschlagkante weg nach unten verschwenken kann, wenn die von oben wirkende Kraft , in Fig. 5 schematisch illustriert durch den Pfeil F, einen vorbestimmten Schwellenwert überschreitet. In diesem Fall führt die Handballenauflage 10 die in Fig. 5 gezeigte Drehbewegung nach unten um die Halterung 21 und Bedienelement 20 herum durch, um die Kraft F nach unten abzuleiten. Die Handballenauflage 10 kann bei einer zu hohen Last somit nach unten wegschwenken in eine dritte Ausweichposition, wie dies in Fig. 5 dargestellt ist.

Zur Realisierung dieses Überlastschutzes 16 kann dieser somit die vorstehend beschriebene Anschlagkante sowie den Federmechanismus im Bereich der Schwenkachse 15 aufweisen, um auf diese Weise ein Schutzgelenk oder Schutzscharnier auszubilden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Anordnung
- 2: Hand
- 3: Handballen
- 4: Fahrersitz
- 4a: Aufenthaltsbereich
- 5: Instrumententafel
- 6: Lenkrad
- 7: Freiraum, z. B. Durchstieg
- 8: Fahrzeug
- 9: Fahrerhaus
- 10: Handballenauflage
- 11: Haltebereich
- 12: Kopfbereich
- 13: Handballenauflagefläche
- 14: Endbereich
- 15: Schwenkverbindung
- 16: Überlastschutz
- 20: Bedienelement
- 21: Halterung
- 22: Drehsteller
- 22a: Außenring
- 23: Berührungsempfindliche Oberfläche

## Patentansprüche

1. Anordnung (1) einer Handballenauflage (10) und eines handbetätigbaren Bedienelements (20) für ein Fahrzeug, wobei die Handballenauflage (10) dazu ausgebildet ist, eine erste und eine zweite Position relativ zum Bedienelement (20) einzunehmen, wobei die Handballenauflage (10) in der ersten Position derart positioniert ist, dass sie ein Abstützen einer Hand (2) bei der Bedienung des Bedienelements (20) ermöglicht,
**dadurch gekennzeichnet,**
**dass** die Handballenauflage (10) in der zweiten Position derart positioniert ist, dass die Handballenauflage (10) das Bedienelement (20) zumindest teilweise überragt und/oder verdeckt.

2. Anordnung (1) nach Anspruch 1, wobei die Handballenauflage (10) aufweist:
a) einen länglichen und/oder armförmigen Haltebereich (11), der zum beweglichen Anordnen der Handballenauflage (10) relativ zum Bedienelement (20) ausgebildet ist; und
b) einen Kopfbereich (12), der an einem Endbereich des Haltebereichs (11) angeformt ist, von diesem absteht, vorzugsweise in Richtung des Bedienelements (20) absteht, und an seiner Oberseite eine Handballenauflagefläche (13) ausbildet.

3. Anordnung (1) nach Anspruch 2, wobei der Kopfbereich (12)
a) griffförmig, knaufförmig, pilzförmig und/oder als Verdickung an einem Endbereich des Haltebereichs (11) ausgeführt ist; und/oder
b) im Wesentlichen senkrecht von dem Haltebereich (11) absteht.

4. Anordnung (1) nach Anspruch 2 oder 3, wobei in der zweiten Position der Kopfbereich (12) das Bedienelement (20) derart überragt, dass bei einer auf der Handballenauflage (10) abgestützten Hand (2) eine handbetätigte Bedienung des Bedienelements (20) nicht möglich ist, oder zumindest behindert oder nur unter erheblichen Komforteinbußen möglich ist.

5. Anordnung (1) nach einem der vorhergehenden Ansprüche, wobei die Handballenauflage (10) eine Schwenkverbindung (15) aufweist, um die Handballenauflage (10) relativ beweglich zum Bedienelement (20) anzuordnen.

6. Anordnung (1) nach einem der Ansprüche 2 oder 3 und 4, wobei zur Ausbildung der Schwenkverbindung (15) die Handballenauflage um eine quer zur Längsrichtung des Haltebereichs verlaufende Schwenkachse (15), die an einem dem Kopfbereich abgewandten Endbereich (14) des Haltebereichs (11) angeordnet ist, verschwenkbar an einem Gehäuse oder einer Halterung (21) des Bedienelements (20) gehaltert ist.

7. Anordnung (1) nach einem der vorhergehenden Ansprüche, wobei das Bedienelement (20) einen mechanischen Drehsteller (22) und eine berührungsempfindliche Eingabe-Oberfläche (23) umfasst.

8. Anordnung (1) nach Anspruch 7, wobei der mechanische Drehsteller (22) einen drehbaren Außenring (22a) aufweist, der die berührungsempfindliche Eingabe-Oberfläche (23) umschließt.

9. Anordnung (1) nach Anspruch 8, wobei der Außenring (22a) ferner einen mechanischen Tast-, Druck- oder Kippschalter ausbildet, der vorzugsweise als monostabiler Tast- oder Kippschalter, der nach dem manuellen Auslenken in zumindest eine Richtung wieder in seine Ausgangslage zurückkehrt, ausgeführt ist.

10. Anordnung (1) nach einem der vorhergehenden Ansprüche, wobei die Anordnung (1) einen Überlastschutz (16) zum Schutz der Handballenauflage (10) und/oder des Bedienelements (20) vor zu starker mechanischer Belastung aufweist, wobei der Überlastschutz optional als Schutzscharnier oder Schutzgelenk ausgeführt ist, das bei einer vorbestimmten mechanischen Überlastung ausrastet oder überschnappt.

11. Fahrzeug (8), umfassend eine Anordnung (1) nach einem der vorhergehenden Ansprüche.

12. Fahrzeug (8) nach Anspruch 11,
a) wobei das Bedienelement (20) eine Bedienelement zur Ansteuerung eines Fahrzeug-Infotainment-Systems ist; und/oder
b) wobei mittels des Bedienelements (20) lediglich ein Infotainment-System des Fahrzeugs (8) ansteuerbar ist.

13. Fahrzeug (8) nach einem der Ansprüche 11 oder 12, wobei das Bedienelement (20) und die Handballenauflage (10) im Bereich oder angrenzend zu einer Innenraumkomponente des Fahrzeugs, vorzugsweise einer Instrumententafel (5), derart angeordnet sind, dass die Handballenauflage (10) sich in der zweiten Position näher an der Innenraumkomponente befindet als in der ersten Position.

14. Fahrzeug (8) nach einem der Ansprüche 11 bis 13, wobei die Anordnung (1), umfassend das Bedienelement (10) und die Handballenauflage (20), zwischen einer Instrumententafel (5) und einem Fahrersitz (4) des Fahrzeugs (8) angeordnet ist, wobei ein Freiraum (7) zwischen der Anordnung (1) und dem Fahrersitz (4) größer ist, wenn sich die Handballenauflage (10) in der zweiten Position befindet, als wenn sich die Handballenauflage (10) in der ersten Position befindet.

15. Fahrzeug (8) nach einem der Ansprüche 11 bis 14, wobei das Fahrzeug (8) ein Nutzfahrzeug ist, vorzugsweise ein Lastkraftwagen oder ein Omnibus.
